# EUROPÄISCHE PATENTSCHRIFT

(11) **EP 2 158 266 B1**
(45) Veröffentlichungstag und Bekanntmachung des Hinweises auf die Patenterteilung: **31.08.2011**
(21) Anmeldenummer: 08774058.5
(22) Anmeldetag: 09.06.2008
(51) Int. Cl.: C08L 33/02, C08L 33/26, C08L 35/02, C08J 5/10, C08J 5/04, C08J 5/06

(54) **VERFAHREN ZUR HERSTELLUNG VON FORMKÖRPERN**
METHOD FOR PRODUCING FORMED BODIES
PROCÉDÉ DE RÉALISATION DE CORPS MOULÉS

(30) Priorität: 13.06.2007 EP 07110206
(43) Veröffentlichungstag der Anmeldung: 03.03.2010
(73) Patentinhaber: BASF SE, 67056 Ludwigshafen (DE)
(72) Erfinder: BÖRZEL, Heidi, 67061 Ludwigshafen (DE); MICHL, Kathrin, 67063 Ludwigshafen (DE); SCHEIDHAUER, Rainer, 67454 Hassloch (DE)
(86) Internationale Anmeldenummer: PCT/EP2008/057162
(87) Internationale Veröffentlichungsnummer: WO 2008/152018

(56) Entgegenhaltungen:
- EP-A- 1 203 648
- EP-A- 1 707 665
- DE-C1- 19 956 420
- US-A- 6 099 773

## Beschreibung

Gegenstand der vorliegenden Erfindung ist ein Verfahren zur Herstellung eines Formkörpers aus körnigen und/oder faserförmigen Substraten auf Basis nachwachsender Rohstoffe und einem formaldehydfreien, wässrigen Bindemittel, welches als wirksame Bestandteile
a) ein Polymerisat A, welches zu 5 bis 100 Gew.-% aus einem ethylenisch ungesättigten Carbonsäureanhydrid oder einer ethylenisch ungesättigten Dicarbonsäure, deren Carbonsäuregruppen eine Anhydridgruppe ausbilden können, in einpolymerisierter Form aufgebaut ist, und
b) ein Alkanolamin B, welches wenigstens 2 Hydroxylgruppen aufweist,
enthält, wobei die körnigen und/oder faserförmigen Substrate mit dem formaldehydfreien, wässrigen Bindemittel imprägniert werden, daran anschließend die imprägnierten körnigen und/oder faserförmigen Substrate zu einem Formkörper geformt werden und daran anschließend der so erhaltene Formkörper einem thermischen Behandlungsschritt unterzogen wird, welches dadurch gekennzeichnet ist, dass 0,01 bis 5 Gew.-% einer organischen Polyaminverbindung C, bezogen auf die Gesamtmenge der körnigen und/oder faserförmigen Substrate, vor der Imprägnierung mit dem formaldehydfreien, wässrigen Bindemittel auf die körnigen und/oder faserförmigen Substrate aufgebracht werden, wobei die organische Polyaminverbindung C ein gewichtsmittleres Molekulargewicht Mw ≥ 1000 g/mol und in Summe wenigstens 5 primäre und/oder sekundäre Aminofunktionen aufweist.

Gemäß WO 97/31059 wurde die Verwendung eines formaldehydfreien, wässrigen Bindemittels, enthaltend
a) ein durch radikalische Polymerisation erhaltenes Polymerisat, welches zu 5 bis 100 Gew.-% aus einem ethylenisch ungesättigten Säureanhydrid oder einer ethylenisch ungesättigten Dicarbonsäure, deren Carbonsäuregruppen eine Anhydridgruppe bilden können, besteht und
b) ein Alkanolamin mit mindestens zwei Hydroxylgruppen,
als Bindemittel für nachwachsende Rohstoffe in Form von Fasern, Schnitzeln oder Spänen zur Herstellung von Formkörpern offenbart. Allerdings vermögen die entsprechend hergestellten Formkörpern bezüglich ihrer Wasseraufnahme und ihrer Dickenquellung unter Wassereinfluss, insbesondere abhängig von den Herstellbedingungen der Formkörper, nicht immer voll zu befriedigen.

Aufgabe der vorliegenden Erfindung war es, ein Verfahren zur Herstellung von Formkörpern auf Basis von körnigen und/oder faserförmigen Substrate bereitzustellen, das zu Formkörpern führt, welche eine geringere Wasseraufnahme und eine geringere Dickenquellung unter Wassereinfluss aufweisen.

Die Aufgabe wurde überraschend durch das eingangs definierte Verfahren gelöst.

Im erfindungsgemäßen Verfahren wird ein wässriges Bindemittel eingesetzt, welches als wirksame Bestandteile
a) ein Polymerisat A, welches zu 5 bis 100 Gew.-% aus einem ethylenisch ungesättigten Carbonsäureanhydrid oder einer ethylenisch ungesättigten Dicarbonsäure, deren Carbonsäuregruppen eine Anhydridgruppe ausbilden können, in einpolymerisierter Form aufgebaut ist, und
b) ein Alkanolamin B, welches wenigstens 2 Hydroxylgruppen aufweist,
enthält.

Vorgenannte Bindemittel, ihre Herstellung und ihre Verwendung werden in der WO 97/31059, Seite 2, Zeile 22 bis Seite 18, Zeile 14 offenbart. Auf diese Offenbarung soll im Rahmen dieser Schrift ausdrücklich Bezug genommen werden.

Das erfindungsgemäß eingesetzte Polymerisat A ist zu 5 bis 100 Gew.-%, bevorzugt 5 bis 50 Gew.-% und besonders bevorzugt zu 10 bis 40 Gew.-% aus einem ethylenisch ungesättigten Säureanhydrid oder einer ethylenisch ungesättigten Dicarbonsäure, deren Carbonsäuregruppen eine Anhydridgruppe bilden können [im folgenden Monomere a) genannt], in einpolymerisierter Form aufgebaut.

Als Säureanhydride sind Dicarbonsäureanhydride bevorzugt. Geeignete ethylenisch ungesättigte Dicarbonsäuren sind im allgemeinen solche mit Carbonsäuregruppen an benachbarten Kohlenstoffatomen. Die Carbonsäuregruppen können auch in Form ihrer Salze, beispielsweise Alkalimetall- oder Ammoniumsalze, insbesondere in Form ihrer Natrium- oder Kaliumsalze vorliegen.

Als Monomere a) bevorzugt eingesetzt werden Maleinsäure, Maleinsäureanhydrid, Itaconsäure, Norbornendicarbonsäure, 1,2,3,6-Tetrahydrophthalsäure, 1,2,3,6-Tetrahydrophthalsäureanhydrid, deren Alkalimetall- und Ammoniumsalze oder Mischungen daraus. Besonders bevorzugt sind Maleinsäure und Maleinsäureanhydrid. Neben den Monomeren a) kann das Polymerisat A noch 0 bis 95 Gew.-%, bevorzugt 50 bis 95 Gew.-% und besonders bevorzugt von 60 bis 90 Gew.-% an Monomeren b) in einpolymerisierter Form enthalten.

Als Monomere b) können beispielsweise eingesetzt werden:
Monoethylenisch ungesättigte C₃- bis C₁₀-Monocarbonsäuren (Monomere b₁), wie beispielsweise Acrylsäure, Methacrylsäure, Ethylacrylsäure, Allylessigsäure, Crotonsäure, Vinylessigsäure, Maleinsäurehalbester, wie Maleinsäuremonomethylester, deren Mischungen bzw. deren Alkalimetall- und Ammoniumsalze.

Lineare 1-Olefine, verzweigtkettige 1-Olefine oder cyclische Olefine (Monomere b₂), wie beispielsweise Ethen, Propen, 1-Buten, Isobuten, 1-Penten, Cyclopenten, 1-Hexen, Cyclohexen, 1-Octen, 2,4,4-Trimethyl-1-penten gegebenenfalls in Mischung mit 2,4,4-Trimethyl-2-penten, C₈-C₁₀-Olefin-1-Mischungen, 1-Dodecen, C₁₂-C₁₄-Olefin-1-Mischungen, 1-Octadecen, 1-Eicosen, C₂₀-C₂₄-Olefin-1-Mischungen, metallocenkatalytisch hergestellte Oligoolefine mit endständiger Doppelbindung, wie z.B. Oligopropen, Oligohexen und Oligooctadecen sowie durch kationische Polymerisation hergestellte Olefine mit hohem α-Olefin-Anteil, wie beispielsweise Polyisobuten. Selbstverständlich können auch Mischungen von Monomeren b₂ eingesetzt werden.

Vinyl- und Allylalkylether mit 1 bis 40 Kohlenstoffatomen im Alkylrest, wobei der Alkylrest noch weitere Substituenten, wie eine Hydroxylgruppe, eine Amino- oder Dialkylaminogruppe oder eine bzw. mehrere Alkoxylatgruppen tragen kann (Monomere b₃), wie beispielsweise Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether. Selbstverständlich können auch Mischungen von Monomeren b₃ eingesetzt werden.

Acrylamide und alkylsubstituierte Acrylamide (Monomere b₄), wie beispielsweise Acrylamid, Methacrylamid, N-tert.-Butylacrylamid, N-Methyl(meth)acrylamid. Selbstverständlich können auch Mischungen von Monomeren b₄ eingesetzt werden.

Sulfogruppenhaltige Monomere (Monomere b₅), wie beispielsweise Allylsulfonsäure, Methallylsulfonsäure, Styrolsulfonat, Vinylsulfonsäure, Allyloxybenzolsulfonsäure, 2-Acrylamido-2-methylpropansulfonsäure oder deren entsprechende Alkalimetall- oder Ammoniumsalze. Selbstverständlich können auch Mischungen von Monomeren b₅ eingesetzt werden.

C₁- bis C₈-Alkylester oder C₁- bis C₄-Hydroxyalkylester der Acrylsäure, Methacrylsäure oder Maleinsäure oder Ester von mit 2 bis 50 Mol Ethylenoxid, Propylenoxid, Butylenoxid oder Mischungen davon alkoxylierten C₁- bis C₁₈-Alkoholen mit Acrylsäure, Methacrylsäure oder Maleinsäure (Monomere b₆), wie beispielsweise Methyl(meth)acrylat, Ethyl(meth)acrylat, Propyl(meth)acrylat, Isopropyl(meth)acrylat, n-Butyl(meth)acrylat, Hexyl(meth)acrylat, 2-Ethylhexyl(meth)acrylat, 2-Hydroxyethyl(meth)acrylat, 3-Hydroxypropyl(meth) acrylat, Butandiol-1,4-mono(meth)acrylat, Maleinsäuredi-n-butylester, Ethyldiglykol(meth)acrylat, Methylpolyglykol(meth)acrylat (11 EO), (Meth)acrylsäureester von mit 3, 5, 7, 10 oder 30 Mol Ethylenoxid umgesetztem C₁₃/C₁₅-Oxoalkohol. Selbstverständlich können auch Mischungen von Monomeren b₆ eingesetzt werden.

Alkylaminoalkyl(meth)acrylate oder Alkylaminoalkyl(meth)acrylamide oder deren Quaternisierungsprodukte (Monomere b₇), wie beispielsweise 2-(N,N-Dimethylamino)ethyl-(meth)acrylat, 3-(N,N-Dimethylamino)propyl(meth)acrylat, 2-(N,N,N-Trimethylammonium)ethyl (meth)acrylat-chlorid, 2-Dimethylaminoethyl(meth)acrylamid, 3-Dimethylaminopropyl(meth)acrylamid, 3-Trimethylammoniumpropyl(meth)acrylamid-chlorid. Selbstverständlich können auch Mischungen von Monomeren b₇ eingesetzt werden.

Vinyl- und Allylester von C₁- bis C₃₀-Monocarbonsäuren (Monomere b₈), wie beispielsweise Vinylformiat, Vinylacetat, Vinylpropionat, Vinylbutyrat, Vinylvalerat, Vinyl-2-ethyl-hexanoat, Vinylnonoat, Vinyldecanoat, Vinylpivalat, Vinylpalmitat, Vinylstearat, Vinyllaurat. Selbstverständlich können auch Mischungen von Monomeren b₈ eingesetzt werden.

Als weitere Monomere, welche erfindungsgemäß im Polymerisat A einpolymerisiert sein können (Monomere b₉), seien noch genannt: N-Vinylformamid, N-Vinyl-N-methylformamid, Styrol, α-Methylstyrol, 3-Methylstyrol, 1,3-Butadien, N-Vinylpyrrolidon, N-Vinylimidazol, 1-Vinyl-2-methylimidazol, 1-Vinyl-2-methyl-imidazolin, N-Vinylcaprolactam, Acrylnitril, Methacrylnitril, Allylalkohol, 2-Vinylpyridin, 4-Vinylpyridin, Diallyldimethylammoniumchlorid, Vinylidenchlorid, Vinylchlorid, Acrolein, Methacrolein und Vinylcarbazol bzw. Mischungen davon.

Bevorzugte Monomere sind Acrylsäure, Methacrylsäure, Ethen, Propen, Buten, Isobuten, Cyclopenten, Methylvinylether, Ethylvinylether, Acrylamid, 2-Acrylamido-2-methyl-propansulfonsäure, Vinylacetat, Styrol, Butadien und/oder Acrylnitril.

Besonders bevorzugt sind Acrylsäure, Methacrylsäure, Ethen, Acrylamid, Styrol und/oder Acrylnitril.

Ganz besonders bevorzugt sind Acrylsäure, Methacrylsäure und/oder Acrylamid.

Die Polymerisate A können nach üblichen Polymerisationsverfahren hergestellt werden, z. B. durch Substanz-, Emulsions-, Suspensions-, Dispersions-, Fällungs- und Lösungspolymerisation. Bei den genannten Polymerisationsverfahren wird bevorzugt unter Ausschluss von Sauerstoff gearbeitet, vorzugsweise in einem Stickstoffstrom. Für alle Polymerisationsmethoden werden die üblichen Apparaturen verwendet, wie beispielsweise Rührkessel, Rührkesselkaskaden, Autoklaven, Rohrreaktoren und Kneter. Bevorzugt wird nach der Methode der Lösungs-, Emulsions-, Fällungs- oder Suspensionspolymerisation gearbeitet. Besonders bevorzugt sind die Methoden der Lösungs-und Emulsionspolymerisation. Die Polymerisation kann in Lösungs- oder Verdünnungsmitteln, wie beispielsweise Toluol, o-Xylol, p-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivate, Diethylether, tert.-Butylmethylether, Essigsäuremethylester, Isopropanol, Ethanol, Wasser oder Mischungen, wie beispielsweise Isopropanol/Wasser-Mischungen ausgeführt werden. Vorzugsweise wird als Lösungs- oder Verdünnungsmittel Wasser gegebenenfalls mit Anteilen bis zu 60 Gew.-% an Alkoholen oder Glykolen verwendet. Besonders bevorzugt wird Wasser eingesetzt. Entsprechend liegen die Polymerisate A vorzugsweise in Form von wässrigen Lösungen vor.

Die Polymerisation kann bei Temperaturen von 20 bis 300 °C, vorzugsweise von 60 bis 200 °C durchgeführt werden. Je nach Wahl der Polymerisationsbedingungen lassen sich gewichtsmittlere Molekulargewichte von 800 bis 5000000 g/mol, insbesondere von 1000 bis 1000000 g/mol einstellen. Bevorzugt liegen die gewichtsmittleren Molekulargewichte Mw im Bereich von 2000 bis 400000 g/mol. Die gewichtsmittleren Molekulargewichte werden durch die dem Fachmann geläufige Gelpermeationschromatographie ermittelt.

Die Polymerisation wird vorzugsweise in Gegenwart von Radikale bildenden Verbindungen durchgeführt. Man benötigt von diesen Verbindungen bis zu 30 Gew.-%, vorzugsweise 0,05 bis 15 Gew.-% und besonders bevorzugt 0,2 bis 8 Gew.-%, bezogen auf die bei der Polymerisation eingesetzten Monomeren. Bei mehrkomponentigen Initiatorsystemen (z. B. Redox-Initiatorsystemen) beziehen sich die vorstehenden Gewichtsangaben auf die Summe der Komponenten.

Geeignete Polymerisationsinitiatoren sind beispielsweise Peroxide, Hydroperoxide, Peroxidisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butylperbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure).

Die Initiatoren können allein oder in Mischung untereinander angewendet werden, z. B. Mischungen aus Wasserstoffperoxid und Natriumperoxidisulfat. Für die Polymerisation in wässrigem Medium werden bevorzugt wasserlösliche Initiatoren eingesetzt.

Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator z. B. reduzierend wirkenden Schwefelverbindungen, beispielsweise Bisulfite, Sulfite, Thiosulfate, Dithionite und Tetrathionate von Alkalimetallen und Ammoniumverbindungen. So kann man Kombinationen von Peroxodisulfaten mit Alkalimetall- oder Ammoniumhydrogensulfiten einsetzen, z. B. Ammoniumperoxidisulfat und Ammoniumdisulfit. Die Menge der peroxidhaltigen Verbindung zum Redox-Coinitiator beträgt 30 : 1 bis 0,05 : 1.

In Kombination mit den Initiatoren bzw. den Redoxinitiatorsystemen können zusätzlich Übergangsmetallkatalysatoren eingesetzt werden, z. B. Salze von Eisen, Kobalt, Nickel, Kupfer, Vanadium und Mangan. Geeignete Salz sind z. B. Eisen-II-sulfat, Kobalt-II-chlorid, Nickel-II-sulfat, Kupfer-I-chlorid. Bezogen auf Monomeren wird das reduzierend wirkende Übergangsmetallsalz in einer Konzentration von 0,1 ppm bis 1000 ppm eingesetzt. So kann man Kombinationen von Wasserstoffperoxid mit Eisen-II-Salzen einsetzen, wie beispielsweise 0,5 bis 30 Gew.-% Wasserstoffperoxid und 0,1 bis 500 ppm Mohrsches Salz.

Auch bei der Polymerisation in organischen Lösungsmitteln können in Kombination mit den obengenannten Initiatoren Redox-Coinitiatoren und/oder Übergangsmetallkatalysatoren mitverwendet werden, z. B. Benzoin, Dimethylanilin, Ascorbinsäure sowie organisch lösliche Komplexe von Schwermetallen, wie Kupfer, Cobalt, Eisen, Mangan, Nickel und Chrom. Die üblicherweise verwendeten Mengen an Redox-Coinitiatoren bzw. Übergangsmetallkatalysatoren betragen hier üblicherweise etwa 0,1 bis 1000 ppm, bezogen auf die zur Polymerisation eingesetzten Mengen an Monomeren.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so dass in jedem Temperaturintervall eine ausreichende Konzentration an Radikalen zur Verfügung steht.

Um Polymerisate A mit niedrigem mittleren Molekulargewicht herzustellen, ist es oft zweckmäßig, die Polymerisation in Gegenwart von sogenannten Radikalkettenreglern durchzuführen. Hierfür können übliche Radikalkettenregler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, C₁- bis C₄-Aldehyde, wie Formaldehyd, Acetaldehyd, Propionaldehyd, Hydroxylammoniumsalze wie Hydroxylammoniumsulfat, Ameisensäure, Natriumbisulfit oder Isopropanol. Die Radikalkettenregler werden im allgemeinen in Mengen von 0,1 bis 10 Gew.-%, bezogen auf die Monomeren eingesetzt. Auch durch die Wahl des geeigneten Lösungsmittels kann auf das mittlere Molekulargewicht Einfluss genommen werden. So führt die Polymerisation in Gegenwart von Verdünnungsmitteln mit benzylischen H-Atomen zu einer Verringerung des mittleren Molekulargewichtes durch Kettenübertragung.

Um höhermolekulare Polymerisate A herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z. B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z. B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9000 g/mol. Polyethylenglykole bzw. Polypropylenglykole, die für die Herstellung der Diacrylate oder Dimethacrylate verwendet werden, haben vorzugsweise ein Molekulargewicht von jeweils 400 bis 2000 g/mol. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid-und Propylenoxid-Einheiten statistisch verteilt enthalten. Auch die Oligomeren des Ethylenoxids bzw. Propylenoxids sind für die Herstellung der Vernetzer geeignet, z. B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane. Die Vernetzer werden vorzugsweise in Mengen von 10 ppm bis 5 Gew.-%, bezogen auf die zu polymerisierenden Monomere, eingesetzt.

Wird nach der Methode der Emulsions-, Fällungs-, Suspensions- oder Dispersionspolymerisation gearbeitet, so kann es vorteilhaft sein, die Polymertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE-A 2501123 beschrieben sind.

Die Emulgatoren oder Schutzkolloide werden üblicherweise in Konzentrationen von 0,05 bis 20 Gew.-%, bezogen auf die Monomere, eingesetzt.

Wird in wässriger Lösung oder Verdünnung polymerisiert, so können die Monomere vor oder während der Polymerisation ganz oder teilweise durch Basen neutralisiert werden. Als Basen kommen beispielsweise Alkalimetall- oder Erdalkalimetallverbindungen, wie beispielsweise Natriumhydroxid, Kaliumhydroxid, Calciumhydroxid, Magnesiumoxid, Natriumcarbonat aber auch Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Dimethoxyethylamin, 2-Ethoxyethylamin, 3-Ethoxypropylamin, Dimethylethanolamin oder Morpholin in Frage.

Weiterhin können auch mehrbasische Amine zur Neutralisation eingesetzt werden, wie z. B. Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin oder Polyvinylamin.

Vorzugsweise werden zur partiellen oder vollständigen Neutralisation der ethylenisch ungesättigten Carbonsäuren vor oder während der Polymerisation Ammoniak oder die Alkanolamine B Triethanolamin und Diethanolamin eingesetzt.

Besonders bevorzugt werden die ethylenisch ungesättigten Carbonsäuren vor und während der Polymerisation nicht neutralisiert. Bevorzugt wird auch nach der Polymerisation kein Neutralisierungsmittel, abgesehen vom Alkanolamin B, zugesetzt. Die Durchführung der Polymerisation kann nach einer Vielzahl von Varianten kontinuierlich oder diskontinuierlich durchgeführt werden. Häufig legt man einen Teil der Monomeren gegebenenfalls in einem geeigneten Verdünnungsmittel oder Lösungsmittel und gegebenenfalls in Anwesenheit eines Emulgators, eines Schutzkolloids oder weiterer Hilfsstoffe im Polymerisationsgefäß vor, inertisiert, und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie beispielsweise Radikalkettenregler oder Vernetzer jeweils gegebenenfalls in einem Verdünnungsmittel zudosiert. Die Zulaufzeiten können unterschiedlich lang gewählt werden. Beispielsweise kann man für den Initiatorzulauf eine längere Zulaufzeit wählen als für den Monomerzulauf.

Wird das Polymerisat A nach dem Verfahren einer Lösungspolymerisation in Wasser gewonnen, so ist üblicherweise keine Abtrennung des Lösungsmittels notwendig. Besteht dennoch der Wunsch, das Polymerisat A als Feststoff zu isolieren, kann beispielsweise eine Sprühtrocknung durchgeführt werden.

Wird das Polymerisat A nach der Methode einer Lösungs-, Fällungs- oder Suspensionspolymerisation in einem wasserdampfflüchtigen Lösungsmittel oder Lösungsmittelgemisch hergestellt, so kann das Lösungsmittel durch Einleiten von Wasserdampf abgetrennt werden, um so zu einer wässrigen Lösung oder Dispersion zu gelangen. Das Polymerisat A kann von dem organischen Verdünnungsmittel auch durch einen Destillations- bzw. Trocknungsprozess abgetrennt werden.

Bevorzugt wird das Polymerisat A in Form einer wässrigen Dispersion oder Lösung, mit einem Feststoffgehalt von vorzugsweise 10 bis 80 Gew.-%, insbesondere 40 bis 65 Gew.-% eingesetzt.

Polymerisat A kann auch durch Pfropfung von Maleinsäure bzw. Maleinsäureanhydrid bzw. einer Maleinsäure oder Maleinsäureanhydrid enthaltenden Monomermischung auf eine Pfropfgrundlage erhalten werden. Geeignete Pfropfgrundlagen sind beispielsweise Monosaccharide, Oligosaccharide, modifizierte Polysaccharide und Alkylpolyglykolether. Solche Pfropfpolymerisate sind beispielsweise in DE-A 40 03 172 oder EP-A 116 930 offenbart.

Als Alkanolamin B, werden solche Alkanolamine eingesetzt, welche wenigstens 2 Hydroxylgruppen aufweisen. Bevorzugt sind Alkanolamine der Formel (I) 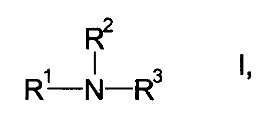 in der R¹ für ein H-Atom, eine C₁-C₁₀-Alkylgruppe oder eine C₂-C₁₀-Hydroxyalkylgruppe steht und R² und R³ für eine C₂-C₁₀-Hydroxyalkylgruppe stehen.

Besonders bevorzugt stehen R² und R³ unabhängig voneinander für eine C₂-C₅-Hydroxyalkylgruppe und R¹ für ein H-Atom, eine C₁-C₅-Alkylgruppe oder eine C₂-C₅-Hydroxyalkylgruppe.

Als Verbindungen der Formel (I) seien insbesondere Diethanolamin, Triethanolamin, Diisopropanolamin, Triisopropanolamin, Methyldiethanolamin, Butyldiethanolamin und Methyldiisopropanolamin genannt. Besonders bevorzugt ist Triethanolamin.

Zur Herstellung der formaldehydfreien, wässrigen Bindemittel werden das Polymerisat A und das Alkanolamin B bevorzugt in einem solchen Mengenverhältnis zueinander eingesetzt, dass das Molverhältnis von Carboxylgruppen des Polymerisats A zu den Hydroxylgruppen des Alkanolamins B 20 : 1 bis 1 : 1, bevorzugt 8 : 1 bis 5 : 1 und besonders bevorzugt 5 : 1 bis 1,7: 1 beträgt (die Anhydridgruppen werden hierbei als 2 Carboxylgruppen berechnet).

Die Herstellung der formaldehydfreien, wässrigen Bindemittel erfolgt beispielsweise in einfacher Weise durch Zugabe des Alkanolamins B zur wässrigen Dispersion oder Lösung des Polymerisats A.

Die vorgenannten wässrigen Bindemittel enthalten vorzugsweise weniger als 1,5 Gew.-%, insbesondere weniger als 1,0 Gew.-%, besonders bevorzugt weniger als 0,5 Gew.-% und ganz besonders bevorzugt weniger als 0,3 Gew.-%, insbesondere weniger als 0,1 Gew.-%, bezogen auf die Summe aus Polymerisat A und Alkanolamin B eines Phosphor enthaltenden Reaktionsbeschleunigers. Phosphor enthaltende Reaktionsbeschleuniger sind beispielsweise in US-A 651 088 und US-A 583 086 offenbart. Es handelt sich dabei insbesondere um Alkalimetallhypophosphite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die wässrigen Bindemittel enthalten vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittel können jedoch einen Veresterungskatalysator enthalten, wie beispielsweise Schwefelsäure oder p-Toluolsulfonsäure bzw. Titanate oder Zirkonate.

Die wässrigen Bindemittel können jedoch auch noch weitere für die jeweilig beabsichtigte Verwendung geeignete Zusatzstoffe enthalten. In Betracht kommen beispielsweise dem Fachmann geläufige Farbstoffe, Pigmente, Biozide, Hydrophobierungsmittel, Netzmittel, Plastifizierungsmittel, Verdickungsmittel, Haftverbesserer, Reduktionsmittel und Umesterungskatalysatoren.

Das erfindungsgemäße Verfahren eignet sich für alle körnigen und/oder faserförmigen Substrate auf Basis nachwachsender Rohstoffe, wie insbesondere Sisalfaserm, Jutefasern, Flachsfasern, Kokosfasern, Bananenfasern, Hanffasern, und/oder Kenaffasern sowie Schnitzel, Späne, Granulate (mittlere Partikelgröße: 0,5 bis 8 mm) und/oder Stäube (mittlere Partikelgröße: 0,1 bis 0,5 mm) von Kork oder Holz, wie insbesondere Fichten-, Pinien- oder Eukalyptusholz. Selbstverständlich soll der Begriff faserförmiges Substrat auch die aus den genannten Fasern erhältlichen Faservliese, insbesondere in mechanisch verfestigter Form vorliegenden Faservliesen, beispielsweise sogenannte genadelte Faservliese mit umfassen.

Das erfindungsgemäße Verfahren zeichnet sich dadurch aus, dass 0,01 bis 5 Gew.-% einer organischen Polyaminverbindung C, bezogen auf die Gesamtmenge der körnigen und/oder faserförmigen Substrate, vor der Imprägnierung mit dem formaldehydfreien, wässrigen Bindemittel auf die körnigen und/oder faserförmigen Substrate aufgebracht werden, wobei die organische Polyaminverbindung C ein gewichtsmittleres Molekulargewicht Mw ≥ 1000 g/mol und in Summe wenigstens 5 primäre und/oder sekundäre Aminofunktionen aufweist.

Erfindungsgemäß können als Polyaminverbindung C alle organischen Polyaminverbindungen eingesetzt werden, die ein gewichtsmittleres Molekulargewicht Mw ≥ 1000 g/mol und in Summe wenigstens 5 primäre und/oder sekundäre Aminofunktionen aufweisen. Mit Vorteil liegt das gewichtsmittlere Molekulargewicht Mw der Polyaminverbindung C im Bereich ≥ 2000 und ≤ 5000000 g/mol und insbesondere vorteilhaft im Bereich ≥ 5000 und ≤ 3000000 g/mol, wobei die Bestimmung des gewichtsmittleren Molekulargewichts Mw gelpermeationschromatographisch erfolgt.

Mit Vorteil weist die Polyaminverbindung C im Durchschnitt pro 1000 Molekulargewichtseinheiten in Summe wenigstens 10 und insbesondere vorteilhaft wenigstens 20 primäre und/oder sekundäre Aminofunktionen auf. Vorteilhaft ist die Polyaminverbindung C ausgewählt ist aus der Gruppe umfassend Polyethyleniminen, Polyallylaminen, Polyvinylaminen, teilhydrolysierten Polyvinylformamiden und/oder Polyamidoaminen. Die Herstellung der vorgenannten Verbindungen ist dem Fachmann geläufig. So ist die Herstellung von Polyethyleniminen durch säurekatalysierte Umsetzung von Ethylenimin, beispielsweise in US-A 2,282,306 oder US-A 3,203,910, die Herstellung von Polyallylaminen durch radikalische Polymerisation von Allylammoniumverbindungen, beispielsweise in EP-A 95 233, die Herstellung von Polyvinylaminen bzw. von teilhydrolysierten Polyvinylformamiden durch vollständige oder teilweise säure- oder basenkatalysierte Hydrolyse von Polyvinylformamiden, beispielsweise in Gu et al., J. Appl. Polym. Sci., 2002 (86) Seiten 3412 bis 3419, und die Herstellung von Polyamidoaminen ausgehend von 4 bis 10 Kohlenstoffatomen aufweisenden Dicarbonsäuren, wie Maleinsäure, Bernsteinsäure, Glutarsäure, Adipinsäure, Korksäure, Sebacinsäure oder Terephthalsäure und 3 bis 10 primäre oder sekundäre Aminogruppen aufweisenden Polyalkylenpolyaminen, wie Diethylentriamin, Triethylentetramin, Dipropylentriamin, Tripropylentetramin, Dihexamethylentriamin, N-3-Aminopropylethylendiamin und/oder Bis(N,N'-3-aminopropyl)ethylendiamin, beispielsweise in US-A 4,144,123 offenbart.

Erfindungsgemäß vorteilhaft werden Polyaminverbindungen C eingesetzt, welche bei 20 °C und 1 atm (= 1,013 bar absolut) eine Löslichkeit ≥ 5 g, besonders vorteilhaft ≤ 10 g und insbesondere vorteilhaft ≥ 20 g pro 100 g entionisiertes Wasser aufweisen.

Das Aufbringen der Polyaminverbindung C auf die körnigen und/oder faserförmigen Substrate kann prinzipiell in Form der reinen Polyaminverbindung C selbst oder in Form von deren Lösung bzw. Dispersion in einem organischen Lösungsmittel oder in Wasser erfolgen. Vorteilhaft erfolgt das Aufbringen der Polyaminverbindung C in Form einer wässrigen Lösung. Die wässrigen Polyaminverbindung C-Lösungen weisen dabei häufig einen Polyaminverbindung C-Gehalt von ≥ 2 und ≤ 250 g/l und oft ≥ 4 und ≤ 150 g/l auf.

Die Art und Weise des Aufbringens der Polyaminverbindung C auf die körnigen und/oder faserförmigen Substrate ist unkritisch und dem Fachmann geläufig und erfolgt beispielsweise durch Tränken oder durch Besprühen der körnigen und/oder faserförmigen Substrate mit der Polyaminverbindung C oder deren Lösung bzw. Dispersion. Insbesondere vorteilhaft wird die organische Polyaminverbindung C in Form einer wässrigen Lösung aufgebracht. Falls erforderlich kann das mit der Polyaminverbindung C beschichtete körnige und/oder faserförmige Substrat vor dem nachfolgenden Imprägnieren mit dem formaldehydfreien, wässrigen Bindemittel einem Trocknungsschritt unterzogen werden. Dabei erfolgt die Trocknung vorteilhaft bei einer Temperatur im Bereich ≥ 50 und ≤ 150 °C und oft ≥ 80 und ≤ 120 °C. Wird die Polyaminverbindung C oder deren Lösung bzw. Dispersion vom körnigen und/oder faserförmigen Substrat aufgrund dessen porösen Oberflächenstruktur aufgesaugt bzw. absorbiert, so kann auf einen Trocknungsschritt verzichtet werden.

Erfindungsgemäß beträgt die Menge der auf das körnige und/oder faserförmige Substrat aufgebrachter Polyaminverbindung C 0,01 bis 5 Gew.-%, vorteilhaft 0,05 bis 2 Gew.-% und insbesondere vorteilhaft 0,1 bis 1,5 Gew.-%, jeweils bezogen auf die Gesamtmenge an körnigem und/oder faserförmigem Substrat.

Nach dem Aufbringen der Polyaminverbindung C auf die körnigen und/oder faserförmigen Substrate, werden diese behandelten Substrate erfindungsgemäß mit dem formaldehydfreien, wässrigen Bindemittel imprägniert, diese imprägnierten körnigen und/oder faserförmigen Substrate zu einem Formkörper geformt und daran anschließend der so erhaltene Formkörper einem thermischen Behandlungsschritt unterzogen.

Die Art und Weise des Imprägnierens der mit der Polyaminverbindung C behandelten körnigen und/oder faserförmigen Substrate mit dem formaldehydfreien, wässrigen Bindemittel ist unkritisch und dem Fachmann geläufig und erfolgt beispielsweise durch Tränken oder durch Besprühen der vorbehandelten körnigen und/oder faserförmigen Substrate mit dem formaldehydfreien, wässrigen Bindemittel. Dabei wird die Menge an wässrigem Bindemittel so gewählt, dass die Bindemittelmenge, gebildet aus Polymerisat A und Alkanolamin B (als Feststoff gerechnet), 1 bis 50 Gew.-%, vorteilhaft 5 bis 40 Gew.-% und insbesondere vorteilhaft 8 bis 35 Gew.-%, jeweils bezogen auf das körnige und/oder faserförmige Substrat, beträgt.

Nach der Imprägnierung wird das körnige und/oder faserförmige Substrat in die gewünschte Form gebracht, beispielsweise durch Einlegen in eine beheizbare Presse oder Form und diese daran anschließend in einer dem Fachmann geläufigen Art und Weise getrocknet bzw. ausgehärtet.

Häufig erfolgt die Trocknung der erhaltenen Form in zwei Trocknungsstufen, wobei die erste Trocknungsstufe bei einer Temperatur ≤ 100 °C, bevorzugt ≥ 25 und < 95 °C und insbesondere bevorzugt ≥ 60 und ≤ 90 °C und die zweite Trocknungsstufe bei einer Temperatur ≥ 110 °C, bevorzugt ≥ 120 und ≤ 170 °C und insbesondere bevorzugt ≥ 140 und ≤ 160 °C erfolgt.

Die erste Trocknungsstufe erfolgt dabei vorteilhaft dergestalt, dass bei einer Temperatur ≤ 100 °C so lange getrocknet wird, bis der erhaltene Formkörper, welcher häufig noch nicht seine endgültige Form aufweist (sogenanntes Halbzeug) eine Restfeuchte ≤ 15 Gew.-%, bevorzugt ≤ 12 Gew.-% und insbesondere bevorzugt ≤ 10 Gew.-% aufweist. Dabei wird die Restfeuchte bestimmt, indem zuerst der erhaltene Formkörper bei Raumtemperatur gewogen, dieser daran anschließend für 2 Minuten auf 130 °C getrocknet und daran anschließend abgekühlt und wieder bei Raumtemperatur gewogen wird. Dabei entspricht die Restfeuchte der Gewichtsdifferenz des Formkörpers vor und nach dem Trocknungsvorgang, bezogen auf das Gewicht des Formkörpers vor dem Trocknungsvorgang multipliziert mit dem Faktor 100.

Das so erhaltene Halbzeug ist nach Erwärmen auf eine Temperatur ≥ 100 °C noch verformbar und kann bei dieser Temperatur in die endgültige Form des gewünschten Formkörpers gebracht werden.

Die nachfolgende zweite Trocknungsstufe erfolgt vorteilhaft dergestalt, dass das Halbzeug bei einer Temperatur ≥ 110 °C solange erhitzt wird, bis dieses eine Restfeuchte ≤ 3 Gew.-%, bevorzugt ≤ 1 Gew.-% und insbesondere bevorzugt ≤ 0,5 Gew.-% aufweist, wobei das Bindemittel häufig in Folge einer chemischen Reaktion aushärtet.

Häufig erfolgt die Herstellung der Formkörper dadurch, dass das Halbzeug in einer Formpresse in den vorgenannten Temperaturbereichen in die endgültige Form gebracht und ausgehärtet wird.

Die bei der Herstellung der Formkörper angewandten Drücke sind unkritisch und dem Fachmann geläufig und betragen im Allgemeinen 1 bis 1000 bar, vorteilhaft 2 bis 500 bar und insbesondere 10 bis 200 bar (Überdruck). Häufig ist es vorteilhaft, in Druckintervallen zu arbeiten, bei denen sich Phasen des Überdrucks mit Phasen des Normaldrucks [1 atm (absolut)] oder Unterdrucks [< 1 atm (absolut); zur Wasserentfernung] abwechseln.

Selbstverständlich ist es aber auch möglich, dass die erste (Trocknung) und die zweite Trocknungsstufe (Aushärtung) der Formkörper in einem Arbeitsschritt, beispielsweise in einer Formpresse erfolgen.

Erfindungsgemäß von Bedeutung ist, dass durch das Aufbringen der Polyaminverbindung C auf die körnigen und/oder faserförmigen Substrate, die für die Aushärtung des Bindemittels, gebildet aus Polymerisat A und Alkanolamin B, erforderliche Temperatur, im Vergleich zu körnigen und/oder faserförmigen Substraten, auf welche keine Polyaminverbindung C aufgebracht ist, ohne negativen Einfluss auf Festigkeiten, Wasseraufnahme, Dickenquellung etc., deutlich geringer ist, woraus eine Energie- und somit Kosteneinsparung bei der Herstellung der Formkörper resultiert. Selbstverständlich ist es alternativ auch möglich, durch das Aufbringen der Polyaminverbindung C auf die körnigen und/oder faserförmigen Substrate, die Aushärtungszeiten der Formkörper bei der für das Bindemittel üblichen Temperatur ohne negativen Einfluss auf Festigkeiten, Wasseraufnahme, Dickenquellung etc. deutlich zu reduzieren.

Die nach dem erfindungsgemäßen Verfahren zugänglichen Formkörper weisen eine geringe Wasseraufnahme und eine geringe Dickenquellung unter Wassereinfluss auf, wenn sie bei tieferer Temperatur hergestellt wurden. Die erfindungsgemäßen Formkörper können beispielsweise Platten oder vliesartige Formgebilde sein, welche beispielsweise als Automobilinnenteile, wie beispielsweise Türinnenverkleidungen, Armaturenträger, Hutablagen etc. Verwendung finden.

Die Erfindung soll anhand nachfolgender nicht einschränkender Beispiele erläutert werden.

### Beispiel 1:

1000 g trockene Fichtenholzfasern wurden bei 20 bis 25 °C (Raumtemperatur) mit 100 g einer 10 gew.-%igen wässrigen Polyvinylaminlösung (Mw: 750000 g/mol; Luredur^{®} VI; Marke der BASF Aktiengesellschaft, Wirkstoffkonzentration 21 Gew.-%, mit entionisiertem Wasser auf 10 Gew.-% verdünnt) homogen gemischt, anschließend für 40 Minuten in einem 90 °C heißen Umluftofen getrocknet und danach auf Raumtemperatur abgekühlt. 100 g der so behandelten Fichtenholzfasern wurden bei Raumtemperatur über Sprühauftrag im Lödige-Mischer mit 10 g einer 50 gew.-%igen wässrigen Lösung eines Maleinsäureanhydrid/Acrylsäure-Copolymerisat/Triethanolamin-Gemisches (100/30 [fest/fest]) besprüht und homogen gemischt. Die so behandelten feuchten Fichtenholzfasern wurden per Hand homogen zu einer 30 x 30 cm-Matte gestreut, zwecks besserer Handhabung für 1 Minute mit einem 5 kg-Gewicht mit einer ebenen 30 x 30 cm-Kontaktfläche verdichtet und daran anschließend in der Heißpresse bei 140 °C für 15 Sekunden bei 50 bar (Überdruck) verpresst, gefolgt von einem 10 Sekunden dauernden Lüftungshub (0 bar), gefolgt von einer 45 Sekunden-Verpressung bei 140 °C und 200 bar (Überdruck). Daran anschließen wurde die Holzfasermatte auf Raumtemperatur abgekühlt.

### Beispiel 2:

Eine genadelte 30 x 30 cm-Naturfasermatte aus 30 Teilen Hanf/ 70 Teilen Kenaf mit Flächengewicht 1200 g/m² wurde in eine 10 gew.-%ige wässrige Polyvinylaminlösung (Luredur^{®} VI, mit entionisiertem Wasser auf einen Polyvinylamingehalt von 10 Gew.-% verdünnt) getaucht und die Auftragsmenge durch Abquetschen mit dem Foulard auf 10,8 g Polyvinylaminlösung eingestellt (entsprechend 1 Gew.-% Polyvinylamin bezogen auf das Gewicht der Naturfasermatte). Daran anschließend wurde die feuchte Naturfasermatte in einem Umluftofen für 40 Minuten bei 90 °C getrocknet und danach auf Raumtemperatur abgekühlt. Anschließend wurde die vorbehandelte Matte mittels eines Foulard bei 4 bar(Überdruck) mit einer 50 gew.-%igen wässrigen Lösung eines Maleinsäureanhydrid/Acrylsäure-Copolymerisat/Triethanolamin-Gemisches (100/30 [fest/fest]) imprägniert, wobei die Bindemittelmenge durch Abquetschen auf 10,8 g wässrige Bindemittellösung (entsprechend einem Bindemittelgehalt von 5 Gew.-% (fest), bezogen auf das Gewicht der Naturfasermatte) eingestellt wurde. Die bindemittelhaltige Naturfasermatte wurde anschließend in der Heißpresse zuerst für 15 Sekunden bei 140 °C und 50 bar (Überdruck), gefolgt von einem 10 Sekunden dauernden Lüftungshub (bei 0 bar) und daran anschließend für 45 Sekunden bei 140 °C und 200 bar (Überdruck) gepresst.

### Vergleichsbeispiel 1 (VB1)

Die Herstellung des Vergleichsbeispiels 1 erfolgte analog Beispiel 1 mit dem Unterschied, dass auf die Imprägnierung mit dem Polyvinylamin verzichtet und die Fichtenholzfasern direkt mit der 50 gew.-%igen wässrigen Lösung eines Maleinsäureanhydrid/Acrylsäure-Copolymerisat/Triethanolamin-Gemisches (100/30 [fest/fest]) gemischt wurden.

### Vergleichsbeispiel 2 (VB2)

Die Herstellung des Vergleichsbeispiels 2 erfolgte analog Beispiel 2 mit dem Unterschied, dass auf die Imprägnierung mit dem Polyvinylamin verzichtet und die Naturfasermatte direkt mit der 50 gew.-%igen wässrigen Lösung eines Maleinsäureanhydrid/Acrylsäure-Copolymerisat/Triethanolamin-Gemisches (100/30 [fest/fest]) getränkt wurde.

### Anwendungstechnische Untersuchungen

Von den in den Beispielen/Vergleichsbeispielen hergestellten Fasermatten wurden Stücke definierter Größe ausgestanzt und mit diesen die Wasseraufnahme, die Dickenquellung (Probengröße je 5 x 5 cm), Biegefestigkeiten und die E-Module (Probengröße 14 x 5 cm für Holzfaserverbund und 10 x 5 cm für Faserverbund) bestimmt. Die entsprechenden Ergebnisse sind in Tabelle 1 zusammengefasst.

Die Wasseraufnahme und die Dickenquellung wurden generell nach DIN 52351 bestimmt.

Die Bestimmung der Biegefestigkeiten erfolgte nach DIN 178 (Beispiel 1 und VB 1 bei 23 °C) bzw. DIN 310 (Beispiel 2 und VB 2 bei 23 °C und Beispiel 1 und VB 1 bei 120 °C) und der E-Module nach DIN 310 (Beispiel 1 und VB 1 bei 120 °C).

**Tabelle 1: Ergebnisse der anwendungstechnischen Untersuchungen**

| | Beispiel 1 | Beispiel 2 | VB 1 | VB 2 |
|---|---|---|---|---|
| Wasseraufnahme nach 2 Stunden [Gew.-%] | 96 | 72 | 180 | 114 |
| Wasseraufnahme nach 24 Stunden [Gew.-%] | 103 | 85 | 183 | 123 |
| Dickenquellung nach 2 Stunden [%] | 65 | 57 | 120 | 139 |
| Dickenquellung nach 24 Stunden [%] | 74 | 68 | 146 | 157 |
| Biegefestigkeiten bei 23 °C [N/mm²] | 33 | 52 | 29 | 47 |
| Biegefestigkeit bei 120 °C [N/mm²] | 19 | n.m | 13 | n.m. |
| E-Modul bei 120 °C [N/mm²] | 1748 | n.m. | 1452 | n.m. |

## Patentansprüche

1. Verfahren zur Herstellung eines Formkörpers aus körnigen und/oder faserförmigen Substraten auf Basis nachwachsender Rohstoffe und einem formaldehydfreien, wässrigen Bindemittel, welches als wirksame Bestandteile
a) ein Polymerisat A, welches zu 5 bis 100 Gew.-% aus einem ethylenisch ungesättigten Carbonsäureanhydrid oder einer ethylenisch ungesättigten Dicarbonsäure, deren Carbonsäuregruppen eine Anhydridgruppe ausbilden können, in einpolymerisierter Form aufgebaut ist, und
b) ein Alkanolamin B, welches wenigstens 2 Hydroxylgruppen aufweist, enthält, wobei die körnigen und/oder faserförmigen Substrate mit dem formaldehydfreien, wässrigen Bindemittel imprägniert werden, daran anschließend die imprägnierten körnigen und/oder faserförmigen Substrate zu einem Formkörper geformt werden und daran anschließend der so erhaltene Formkörper einem thermischen Behandlungsschritt unterzogen wird, **dadurch gekennzeichnet, dass** 0,01 bis 5 Gew.-% einer organischen Polyaminverbindung C, bezogen auf die Gesamtmenge der körnigen und/oder faserförmigen Substrate, vor der Imprägnierung mit dem formaldehydfreien, wässrigen Bindemittel auf die körnigen und/oder faserförmigen Substrate aufgebracht werden, wobei die organische Polyaminverbindung C ein gewichtsmittleres Molekulargewicht Mw ≥ 1000 g/mol und in Summe wenigstens 5 primäre und/oder sekundäre Aminofunktionen aufweist.

2. Verfahren nach Anspruch 1, **dadurch gekennzeichnet, dass** die organische Polyaminverbindung C in Form einer wässrigen Lösung aufgebracht wird.

3. Verfahren nach einem der Ansprüche 1 oder 2, **dadurch gekennzeichnet, dass** die Polyaminverbindung C ausgewählt ist aus der Gruppe umfassend Polyethyleniminen, Polyallylaminen, Polyvinylaminen, teilhydrolysierten Polyvinylformamiden und/oder Polyamidoaminen.

4. Verfahren nach einem der Ansprüche 1 bis 3, **dadurch gekennzeichnet, dass** der thermische Behandlungsschritt bei einer Temperatur ≥ 120 und ≤ 170 °C erfolgt.

5. Verfahren nach einem der Ansprüche 1 bis 4, **dadurch gekennzeichnet, dass** die faserförmigen Substrate in mechanisch verfestigter Form vorliegen.

6. Verfahren nach einem der Ansprüche 1 bis 5, **dadurch gekennzeichnet, dass** das Polymerisat A und das Alkanolamin B in einem solchen Mengenverhältnis zueinander eingesetzt werden, dass das Molverhältnis von Carboxylgruppen des Polymerisats A zu den Hydroxylgruppen des Alkanolamis B 20:1 bis 1:1 beträgt.

7. Verfahren nach einem der Ansprüche 1 bis 6, **dadurch gekennzeichnet, dass** die Bindemittelmenge, gebildet aus Polymerisat A und Alkanolamin B (als Feststoff gerechnet), 5 bis 40 Gew.-%, bezogen auf das körnige und/oder faserförmige Substrat, beträgt.

8. Verfahren nach einem der Ansprüche 1 bis 7, **dadurch gekennzeichnet, dass** als körnige und/oder faserförmige Substrate Sisalfaserm, Jutefasern, Flachsfasern, Kokosfasern, Bananenfasern, Hanffasern, und/oder Kenaffasern sowie Schnitzel, Späne, Granulate und/oder Stäube von Holz oder Kork eingesetzt werden.

9. Formkörper erhältlich nach einem Verfahren gemäß einem der Ansprüche 1 bis 8.

## Claims

1. A process for the production of a molding from particulate and/or fibrous substrates based on renewable raw materials and a formaldehyde-free, aqueous binder, which molding comprises, as active constituents,
a) a polymer A which is composed of from 5 to 100% by weight of an ethylenically unsaturated carboxylic anhydride or of an ethylenically unsaturated dicarboxylic acid whose carboxyl groups can form an anhydride group, incorporated in the form of polymerized units, and
b) an alkanolamine B which has at least 2 hydroxyl groups,
the particulate and/or fibrous substrates being impregnated with the formaldehyde-free, aqueous binder, the impregnated particulate and/or fibrous substrates then being shaped to give a molding and the molding thus obtained then being subjected to a thermal treatment step, wherein from 0.01 to 5% by weight of an organic polyamine compound C, based on the total amount of the particulate and/or fibrous substrates, are applied to the particulate and/or fibrous substrates before the impregnation with the formaldehyde-free, aqueous binder, the organic polyamine compound C having a weight average molecular weight Mw of ≥ 1000 g/mol and having in total at least 5 primary and/or secondary amino functions.

2. The process according to claim 1, wherein the organic polyamine compound C is applied in the form of an aqueous solution.

3. The process according to either of claims 1 and 2, wherein the polyamine compound C is selected from the group consisting of polyethyleneimines, polyallylamines, polyvinylamines, partly hydrolyzed polyvinylformamides and/or polyamidoamines.

4. The process according to any of claims 1 to 3, wherein the thermal treatment step is effected at a temperature of ≥ 120 and ≤ 170°C.

5. The process according to any of claims 1 to 4, wherein the fibrous substrates are present in mechanically strengthened form.

6. The process according to any of claims 1 to 5, wherein the polymer A and the alkanolamine B are used in a ratio to one another such that the molar ratio of carboxyl groups of the polymer A to the hydroxyl groups of the alkanolamine B is from 20:1 to 1:1.

7. The process according to any of claims 1 to 6, wherein the amount of binder, farmed from polymer A and alkanolamine B (calculated as solid), is from 5 to 40% by weight, based on the particulate and/or fibrous substrate.

8. The process according to any of claims 1 to 7, wherein sisal fibers, jute fibers, flax fibers, coconut fibers, banana fibers, hemp fibers and/or kenaf fibers and slivers, chips, granules and/or dusts of wood or cork are used as particulate and/or fibrous substrates.

9. A molding obtainable by a process according to any of claims 1 to 8.

## Revendications

1. Procédé de fabrication d'un corps moulé à partir de substrats granulaires et/ou fibreux à base de matières premières renouvelables et d'un liant aqueux sans formaldéhyde, qui contient en tant que constituants actifs
a) un polymère A, qui est formé par 5 à 100 % en poids d'un anhydride d'acide carboxylique éthyléniquement insaturé ou d'un acide dicarboxylique éthyléniquement insaturé, dont les groupes acide carboxylique peuvent former un groupe anhydride, sous forme polymérisée, et
b) une alcanolamine B, qui comprend au moins 2 groupes hydroxyle,
les substrats granulaires et/ou fibreux étant imprégnés avec le liant aqueux sans formaldéhyde, puis les substrats granulaires et/ou fibreux imprégnés étant façonnés en un corps moulé, puis le corps moulé ainsi obtenu étant soumis à une étape de traitement thermique, **caractérisé en ce que** 0,01 à 5 % en poids d'un composé de polyamine organique C, par rapport à la totalité des substrats granulaires et/ou fibreux, sont appliqués sur les substrats granulaires et/ou fibreux avant l'imprégnation avec le liant aqueux sans formaldéhyde, le composé de polyamine organique C présentant un poids moléculaire moyen en poids Mw ≥ 1 000 g/mol et comportant au total au moins 5 fonctions amino primaires et/ou secondaires.

2. Procédé selon la revendication 1, **caractérisé en ce que** le composé de polyamine organique C est appliqué sous la forme d'une solution aqueuse.

3. Procédé selon l'une quelconque des revendications 1 ou 2, **caractérisé en ce que** le composé de polyamine C est choisi dans le groupe comprenant les polyéthylène-imines, les polyallylamines, les polyvinylamines, les polyvinylformamides partiellement hydrolysés et/ou les polyamidoamines.

4. Procédé selon l'une quelconque des revendications 1 à 3, **caractérisé en ce que** l'étape de traitement thermique a lieu à une température ≥ 120 et ≤ 170 °C.

5. Procédé selon l'une quelconque des revendications 1 à 4, **caractérisé en ce que** les substrats fibreux se présentent sous une forme consolidée mécaniquement.

6. Procédé selon l'une quelconque des revendications 1 à 5, **caractérisé en ce que** le polymère A et l'alcanolamine B sont utilisés en une proportion l'un par rapport à l'autre telle que le rapport molaire entre les groupes carboxyle du polymère A et les groupes hydroxyle de l'alcanolamine B soit de 20:1 à 1:1.

7. Procédé selon l'une quelconque des revendications 1 à 6, **caractérisé en ce que** la quantité de liant, formé par le polymère A et l'alcanolamine B (calculés sous forme solide), est de 5 à 40 % en poids, par rapport au substrat granulaire et/ou fibreux.

8. Procédé selon l'une quelconque des revendications 1 à 7, **caractérisé en ce que** des fibres de sisal, des fibres de jute, des fibres de lin, des fibres de coco, des fibres de banane, des fibres de chanvre et/ou des fibres de kenaf, ainsi que des copeaux, des fragments, des granulés et/ou des poudres de bois ou de liège sont utilisés en tant que substrats granulaires et/ou fibreux.

9. Corps moulé pouvant être obtenu par un procédé selon l'une quelconque des revendications 1 à 8.
